# EUROPEAN PATENT APPLICATION

(11) **EP 4 488 952 A1**
(43) Date of publication of application: **08.01.2025**
(21) Application number: 23763484.5
(22) Date of filing: 01.03.2023
(51) Int. Cl.: G06T 19/20, G06T 15/04, G06T 19/00

(54) **INFORMATION PROCESSING DEVICE, IMAGE PROCESSING DEVICE, AND COMPUTER PROGRAM**

(30) Priority: 04.03.2022 JP 2022033155
(71) Applicant: Bandai Co., Ltd., Tokyo 111-8081 (JP)
(72) Inventor: KIYOMIYA Ryota, Tokyo 108-0014 (JP)
(74) Representative: Studio Torta S.p.A.
(86) International application number: PCT/JP2023/007505
(87) International publication number: WO 2023/167227

(57) **Abstract**

[Problem] To acquire information relating to the appearance of an article with high accuracy and make it possible for said information to be used in a virtual space. [Solution] An information processing device that generates data for virtual spaces from scan information pertaining to the appearance of an article acquired by a three-dimensional scanner device, wherein: an indication for operation on first scan information obtained by scanning an article is accepted, the first scan information being displayed in a first screen image for adjusting the coordinate system of the first scan information to match the coordinate system of frame data of the article; and data for virtual spaces is generated from the frame data and second scan information obtained after the operation indication.

## Description

### TECHNICAL FIELD

The present invention relates to an information processing device, an image processing device, and a computer program.

### BACKGROUND ART

Patent Literature 1 discloses a technique of reading information on a plastic model in each terminal and generating and using machine body information in an online game in which machine bodies in a virtual space operated by two or more terminals and connected via a network are played against each other.

### CITATION LIST

### PATENT LITERATURE

Patent Literature 1: Japanese Unexamined Patent Application Publication No. 2016-087007A

### SUMMARY OF INVENTION

### TECHNICAL PROBLEM

In Patent Literature 1, information on a plasmid model is read in a terminal that executes a game, and it is expected to increase the accuracy of reading.

The present invention is aimed at obtaining information on an appearance of an object with high accuracy and making the information available in a virtual space.

### SOLUTION TO PROBLEM

The present invention provides an information processing device that generates virtual space data that is available in a virtual space from scan information on an appearance of an object obtained by a three-dimensional scanner device, and the three-dimensional scanner device is configured to obtain a three-dimensional shape and color information of the object. The information processing device includes: a determination unit configured to determine a type of the object; an obtaining unit configured to obtain frame data, the frame data corresponding to the determined type of the object and being configured to map texture information obtained from the scan information; a display control unit configured to display, on a display unit, a first screen including display of first scan information generated by scanning the object with the three-dimensional scanner device, the first screen being configured to adjust a coordinate system set for the first scan information in accordance with a coordinate system set for the frame data; a reception unit configured to receive an instruction including first operation instruction for at least one of movement and rotation with respect to the first scan information displayed on the first screen; and a first generation unit configured to generate the virtual space data including texture information to be mapped on the frame data from the frame data and second scan information obtained after the display of the first screen ends in response to the instruction.

### ADVANTAGEOUS EFFECTS OF INVENTION

According to the present invention, it is possible to obtain information on an appearance of an object with high accuracy and use in a virtual space.

### BRIEF DESCRIPTION OF DRAWINGS

[FIG. 1] FIG. 1 is a diagram showing an example of a configuration of a gaming system according to an embodiment, and a diagram showing an example of a hardware configuration of an information processing device 100.
[FIG. 2] FIG. 2 is a diagram showing an example of an appearance of a toy body according to the embodiment.
[FIG. 3] FIG. 3 is a diagram showing an example of an appearance of a fastener that fixes the toy body according to the embodiment.
[FIG. 4] FIG. 4 is a diagram showing an example of a data configuration of a data table according to the embodiment.
[FIG. 5] FIG. 5 is a flowchart corresponding to an example of processes for generating gaming data according to the embodiment.
[FIG. 6] FIG. 6 is a flowchart corresponding to an example of a scan process according to the embodiment.
[FIG. 7] FIG. 7 is a flowchart showing an example of a gaming data generation process according to the embodiment.
[FIG. 8] FIG. 8 is a diagram showing a display example of an operation screen displayed during the gaming data generation process according to the embodiment.
[FIG. 9] FIG. 9 is a diagram showing another display example of the operation screen displayed during the gaming data generation process according to the embodiment.
[FIG. 10] FIG. 10 is a flowchart showing an example of a gaming process according to the embodiment.

### DESCRIPTION OF EMBODIMENTS

Hereinafter, an embodiment will be described in detail with reference to the accompanying drawings. The following embodiment does not limit the invention relating to the claims, and all combinations of features described in the embodiment are not necessarily essential to the invention. Two or more features of the plurality of features described in the embodiment may be freely combined. The same or similar components are denoted by the same reference numerals, and redundant description thereof is omitted. In addition, in the drawings, upper, lower, left, right, front, and rear directions with respect to the paper are referred to as upper, lower, left, right, front, and rear directions of a component (or a part) in the present embodiment, and are used in the description of the text.

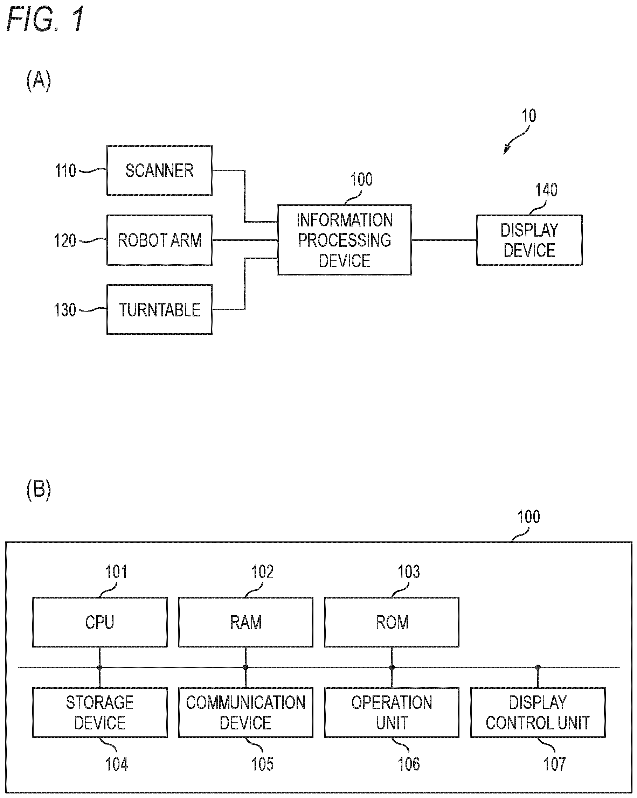

First, a configuration of a gaming system corresponding to the present embodiment will be described. (A) of FIG. 1 is a diagram showing an example of a configuration of a gaming system 10 corresponding to the present embodiment. The gaming system 10 is formed by connecting a scanner 110, a robot arm 120, a turntable 130, and a display device 140 to an information processing device 100.

The information processing device 100 controls operations of the scanner 110, the robot arm 120, and the turntable 130, scans an object to be scanned from any angle to generate three-dimensional data of the object, and applies the obtained three-dimensional data to frame data corresponding to the toy body as a texture to generate gaming data available in a game. In addition, the information processing device 100 can function as a gaming device that executes a gaming process using the generated gaming data, or as an image processing device that generates an image to be displayed in a virtual space using the gaming data as virtual space data. The gaming device and the image processing device may be provided separately from the information processing device 100. In the present embodiment, an object to be scanned is a toy body such as a plastic model or a doll.

The scanner 110 is a three-dimensional scanner device that captures (scans) a three-dimensional shape of a toy body as an imaging target under the control of the information processing device 100 and outputs information on the three-dimensional shape and color of the imaging target. In the present embodiment, scan signals output from the scanner 110 are collectively referred to as a "scan image". As the scanner 110, for example, a Space Spider manufactured by Artec may be used. In the present embodiment, for example, 3D scan data of the entire toy body can be obtained by obtaining the scan image from 500 frames to 800 frames.

The robot arm 120 is a position and posture control device that moves the scanner 110 to a predetermined scan position and posture under the control of the information processing device 100. The robot arm 120 may use, for example, xArm 7 manufactured by UFACTORY. The xArm7 includes seven joints and can move in the same manner as a human arm.

The turntable 130 is a rotation device that is rotatable in a state where the toy body is placed under the control of the information processing device 100. In the present embodiment, after the scanner 110 is positioned at any imaging position and imaging angle by the robot arm 120, the turntable 130 is rotated one round to perform scanning. By performing scanning at a plurality of imaging positions and imaging angles, 3D scan data of the entire toy body is acquired. Since the turntable 130 and the robot arm 120 are driven in synchronization with each other, a scan process can be performed more easily with high accuracy.

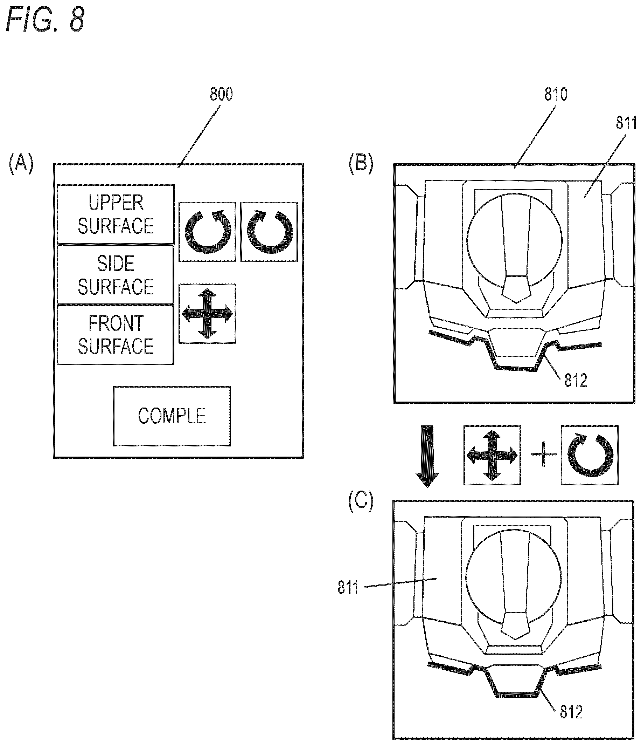

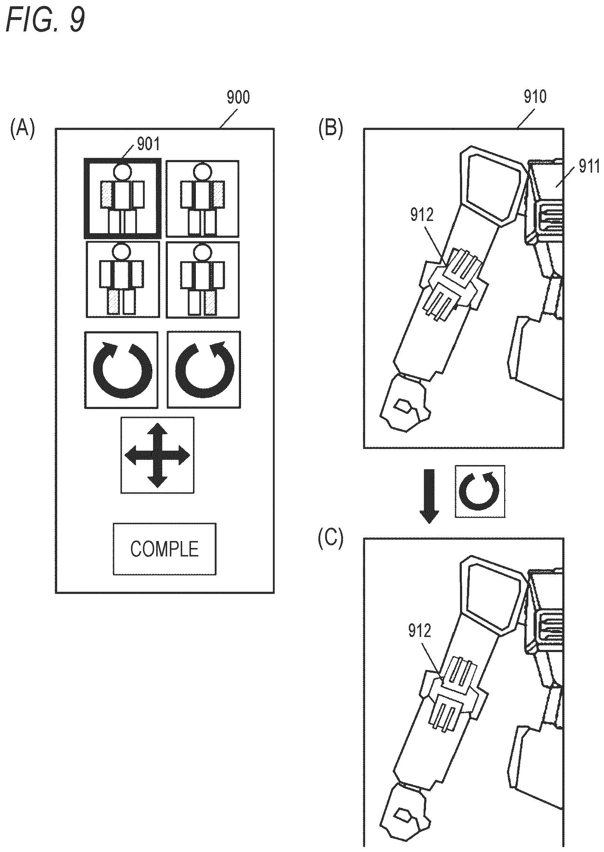

The display device 140 is a display device such as a liquid crystal display (LCD), and displays 3D scan data obtained by the scanner 110, displays an operation screen as shown in FIGS. 8 and 9, or displays a game screen using the generated gaming data.

(B) of FIG. 1 shows an example of a hardware configuration of the information processing device 100. A CPU 101 is a device that performs overall control of the information processing device 100 and data calculation and management. Specifically, the CPU 101 can control an imaging timing of a scan image in the scanner 110 and the number of images captured, and control arm joints of the robot arm 120 to position the scanner 110 at any imaging position and imaging angle. After the imaging position and the imaging angle of the scanner 110 are determined, the turntable 130 is rotated to perform a scan operation by the scanner 110. The CPU 101 may function as an image processing unit that compresses and encodes a digital image signal output from the scanner 110 to generate image data.

The RAM 102 is a volatile memory, and is used as a temporary storage area such as a main memory and a work area of the CPU 101. A ROM 103 is a non-volatile memory and stores image data and other data, various programs for the CPU 101 to operate, and the like in predetermined areas. For example, the CPU 101 controls each unit of the information processing device 100 using the RAM 102 as a work memory in accordance with a program stored in the ROM 103. The programs for the CPU 101 to operate are not limited to the program stored in the ROM 103, and may be stored in a storage device 104.

The storage device 104 is constituted by, for example, a magnetic disk such as an HDD or a flash memory. The storage device 104 stores an application program, an OS, a control program, a related program, a game program, and the like. The storage device 104 can read or write data under the control of the CPU 101. The storage device 104 may be used instead of the RAM 102 and the ROM 103.

The communication device 105 is a communication interface for communicating with the scanner 110, the robot arm 120, and the turntable 130 under the control of the CPU 101. The communication device 105 may include a wireless communication module, and the module may include a well-known circuit mechanism including an antenna system, an RF transceiver, one or more amplifiers or tuners, one or more oscillators, a digital signal processor, a CODEC chip set, a subscriber identification module card, a memory, and the like. Here, communication between the information processing device 100 and the scanner 110, the robot arm 120, and the turntable 130 may be performed by wireless communication.

The communication device 105 may also include a wired communication module for wired connection. The wired communication module enables communication with another device including the display device 140 via one or more external ports. Various software components for processing data may be included. The external port is connected directly or indirectly to another device via Ethernet, USB, IEEE 1394, or the like. Software for realizing the same functions as those of the above devices may be used as a substitute for a hardware device.

An operation unit 106 includes, for example, a button, a keyboard, or a touch panel, and receives an operation input from a user. A display control unit 107 functions as an interface for displaying information on the display device 140 connected to the information processing device 100, and controls an operation of the display device 140.

When the gaming device is provided independently of the information processing device 100, a hardware configuration of the gaming device can be the same as that in (B) of FIG. 1.

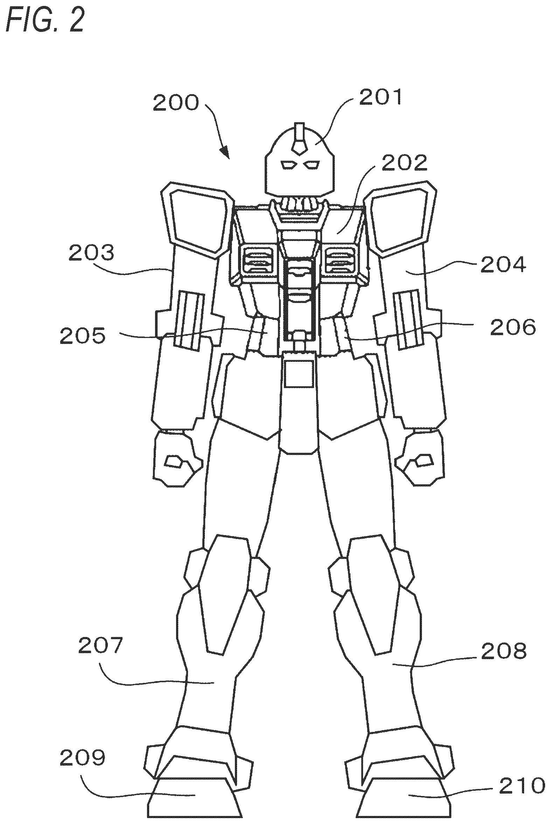

Next, an example of a toy body to be scanned in the present embodiment will be described with reference to FIG. 2. A toy body 200 is a toy body having a doll-like (a robot, or a human) appearance. The toy body may be assembled and coated as a plastic model. The toy body in FIG. 2 is merely an example for purposes of illustration, and a shape of the toy body is not limited to those having a doll-like appearance, and may be a toy body having any shape such as a general vehicle, a race vehicle, an army vehicle, an aircraft, a ship, an animal, and a virtual living body. The object to be scanned is not limited to a toy body as long as the object can be scanned by the scanner 110.

The toy body 200 includes a head portion 201, a chest portion 202, a right arm portion 203, a left arm portion 204, a right body portion 205, a left body portion 206, a right leg portion 207, a left leg portion 208, a right foot portion 209, and a left foot portion 210, and these components are connected to each other. At least some of the individual portions 201 to 210 are supported to be rotatable (or swingable) with respect to the adjacent portions. For example, the head portion 201 is pivotally supported on the chest portion 202, and the right arm portion 203 and the left arm portion 204 are pivotally supported on the chest portion 202. Thus, since a joint structure is provided in each portion of the toy body 200, the toy body 200 can take any posture. On the other hand, in order to obtain information on a three-dimensional shape and color of an outer surface by scanning the toy body 200 with the scanner 110, it is necessary to take a posture suitable for capturing the three-dimensional shape.

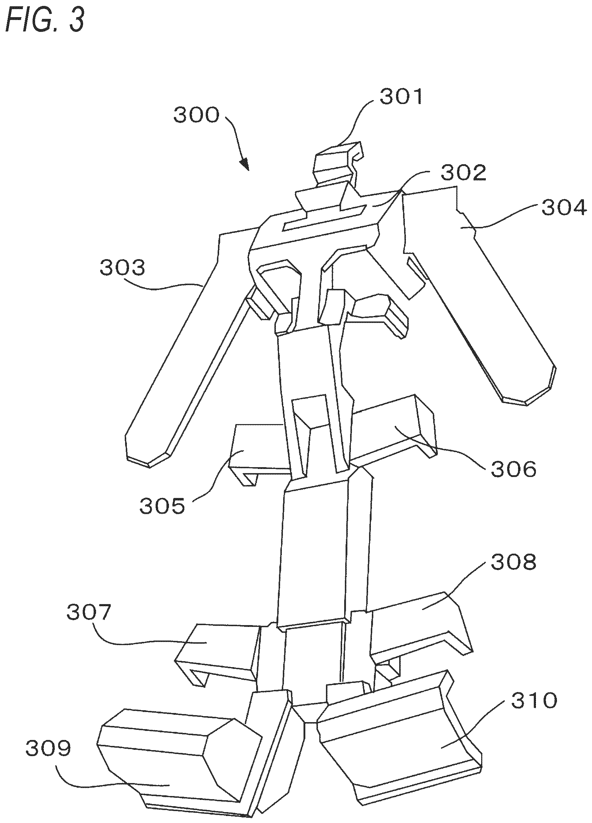

By using a fastener 300 as shown in FIG. 3, a posture when scanning the toy body 200 is determined. The fastener 300 has portions corresponding to respective portions of the head portion 201, the chest portion 202, the right arm portion 203, the left arm portion 204, the right body portion 205, the left body portion 206, the right leg portion 207, the left leg portion 208, the right foot portion 209, and the left foot portion 210 of the toy body 200. A head fixing portion 301 is a member for fixing the head portion 201. A chest fixing portion 302 is a member for fixing the chest portion 202. A right arm fixing portion 303 and a left arm fixing portion 304 fix the right arm portion 203 and the left arm portion 204 to extend away from the chest portion 202. A right body fixing portion 305 and a left body fixing portion 306 fix positions of the right body portion 205 and the left body portion 206 with respect to the chest portion 202. A right leg fixing portion 307 and a left leg fixing portion 208 are members for fixing the right leg portion 207 and the left leg portion 208 with an increased stride length, respectively, and a right foot fixing portion 309 and a left leg fixing portion 310 are members for fixing the right foot portion 209 and the left leg portion 210, respectively.

The fastener 300 fixes to cover the toy body 200 from a front side, and after the toy body 200 is set to a posture corresponding to a shape of the fastener 300, the toy body is disposed on the turntable 130. At this time, after a member for fixing the toy is installed on the turntable 130 and the toy body is attached to the member, the fastener 300 is removed from the toy body 200. Thus, the toy body on the turntable 130 can be disposed in a predetermined posture suitable for obtaining a scan image.

In FIG. 3, although only the fastener 300 used for the main body of the toy body 200 is shown, in a case where the toy body 200 has an accessory and an attachment angle and a shape can be changed in a state where the accessory is attached, a fastener for fixing a posture of the accessory can also be used.

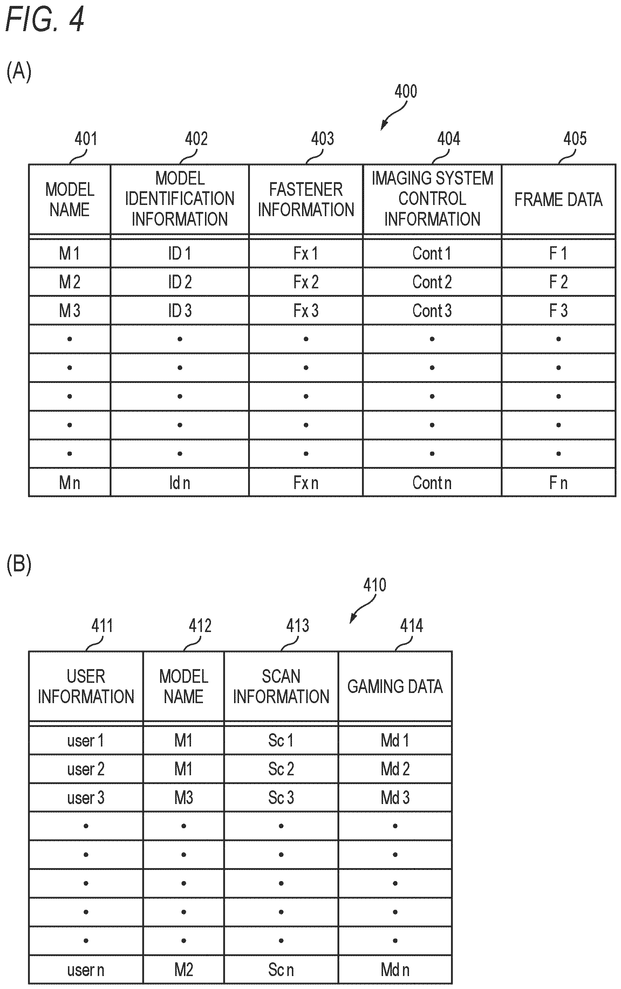

Next, a data structure of various tables stored in the storage device 104 of the information processing device 100 will be described with reference to FIG. 4. In a table 400 of (A) of FIG. 4, model identification information 402, which is information for specifying a model name based on an appearance of a toy body, fastener information 403 that specifies a fastener to be used, imaging system control information 404 at the time of scanning imaging, and frame data (framework information for mapping a scan image as a texture) 405 corresponding to a model of the toy body are registered in association with a model name 401 of the toy body.

First, identification information for uniquely specifying a toy body capable of generating gaming data in the present embodiment is registered in the model name 401. The model identification information 402 is information for specifying a model name or type of the toy body from an appearance of the toy body, and, for example, information on a shape of a specific portion of the toy body may be registered. Specifically, it is possible to specify the model by registering information such as a shape, pattern, and number of the soles of the toy body and processing an image of the soles of the toy body 200 based on the model identification information 402.

Information for identifying a fastener attached to a toy body whose type is determined to be a model registered in the model name 401 is registered in the fastener information 403. The fastener information includes a color, material, shape of the fastener, fastener number, and the like. The imaging system control information 404 is control information for the CPU 101 to control operations of the scanner 110, the robot arm 120, and the turntable 130 for each model at the time of scanning imaging.

Frame data 405 is template data to which a texture generated from a scanner image captured by the scanner 110 is mapped. The frame data includes vertex data (vertex position coordinates, texture coordinates, color data, normal vector, α value, or the like) of each vertex of a model and information on a movable joint. A coordinate system is set individually for the frame data. The frame data is data that is available in a game (except that the texture is not mapped), has an appearance corresponding to various toy bodies, and can be operated on the game similarly to a structure of the toy body. By mapping texture data obtained from an actual toy body to a surface of the frame data, it is possible to express how the toy body is actually operated on the game.

In the present embodiment, an outer shape and a movable joint are different for each model. For example, in a toy body of Model A, the ankles are operated but the hip joints are fixed. In a toy body of Model B, the ankles may not be operated but the hip joints may be operated instead. In this case, in the frame data 405 corresponding to the model A, the ankles are operated, the hip joints are fixed, in the frame data 405 corresponding to the model B, the ankles are fixed and the hip joints are operated. Thus, by including structural characteristics of the actual toy body in the frame data, the structural characteristics of the toy body are reflected in a game performed by obtaining appearance information on the toy body.

Next, (B) of FIG. 4 shows a configuration example of a table 410 in which information and the like obtained by the scan process are registered as registration information for each user. The table 410 registers user information 411, model name 412, scan information 413, and gaming data 414. The user information 411 is information for uniquely identifying a user (or a player) who is an owner of a toy body obtained by scanning. The user information 411 may be used as login information when a game is executed. Information indicating a type of the toy body owned by the user is registered in the model name 412. The model name 412 corresponds to any one of information registered as the model name 401 in the table 400.

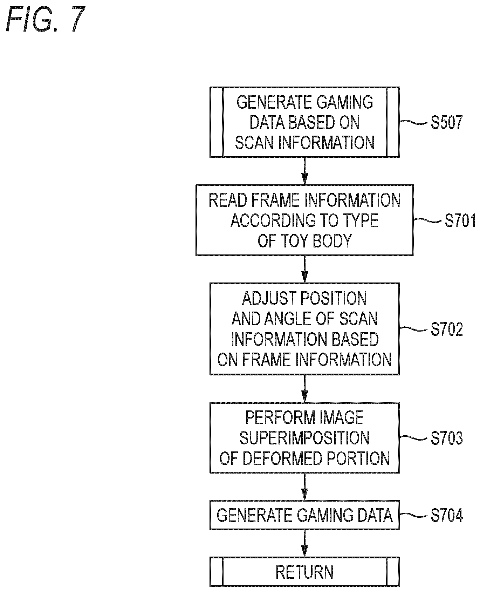

In the scan information 413, information on a scan image obtained by scanning the toy body owned by the user registered in the user name 411 is registered. In the gaming data 414, gaming data generated based on the scan information 413 is registered. A method of generating gaming data will be described later with reference to a flowchart of FIG. 7.

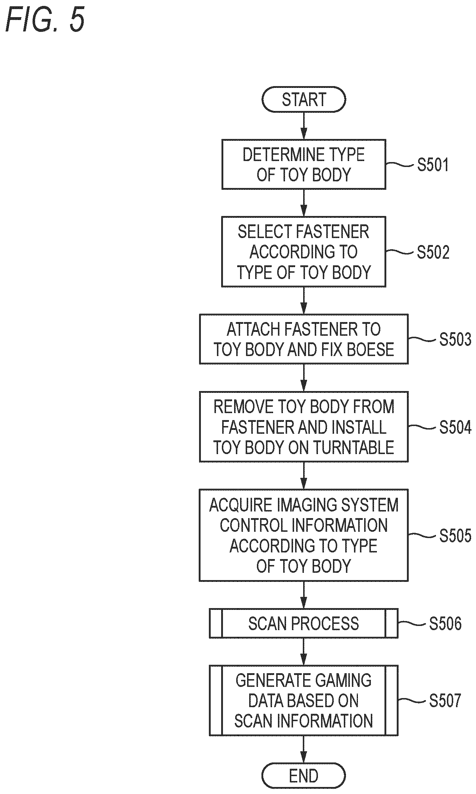

Next, an example of a process executed by the information processing device 100 corresponding to the present embodiment will be described with reference to FIG. 5. A part of the process corresponding to the flowchart is realized by the CPU 101 of the information processing device 100 executing a program stored in the ROM 103 or the storage device 104.

First, in S501, the CPU 101 determines a type of the toy body 200. In the determination of the type, for example, a captured image of the sole of the toy body 200 is input to the information processing device 100, and the CPU 101 executes an image process based on the model identification information 402 on the captured image to specify the type of the toy, that is, the model name 401.

In subsequent step S502, the CPU 101 specifies the corresponding fastener information 403 in the table 400 in accordance with information on the specified model name 401. At this time, the CPU 101 may display the content of the specified fastener information 403 on the display device 140 via the display control unit 107. Specifically, it is possible to display significant information for specifying a fastener such as information necessary for specifying the fastener, for example, a color, a material, a shape of the fastener, and a fastener number.

In subsequent step S503, the user of the information processing device 100 selects the fastener 300 in accordance with the displayed information on the fastener, and attaches the fastener 300 to the toy body 200. A posture of the toy body 200 can be fixed by the fastener 300. Thereafter, in S504, the user attaches the toy body 200 to a fixing member on a turntable, and then removes the fastener 300 from the toy body 200. The steps S503 and S504 may be performed under the control of the CPU 101 using a robot arm or the like regardless of human unit.

In subsequent step S505, the CPU 101 obtains, from the table 400, the imaging system control information 404 according to the type of the toy body 200 determined in S501, and executes the scan process in S506 to generate the scan information 413. In subsequent step S507, the CPU 101 generates the gaming data 414 based on the scan information 413.

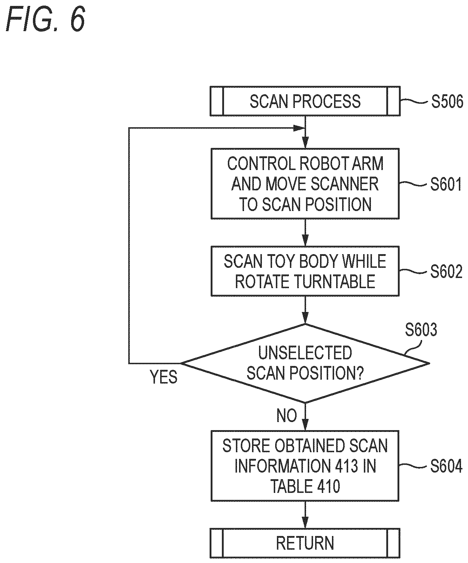

Next, the scan process in S506 will be described in detail with reference to FIG. 6. In the present embodiment, in the imaging control information 404, driving information on the robot arm 120 for specifying a scan position and the number of times of imaging of the scanner 110 at the scan position are registered for each scan position. When imaging is performed at each scan position, scanning is performed by rotating the turntable 130.

First, in S601, the CPU 101 controls the robot arm 120 to move the scanner 110 to any scan position registered in the imaging control information 404. In subsequent step S602, the CPU 101 obtains the scan information 413 of the toy body 200 by capturing 3D data with the scanner 110 while rotating the turntable 130 at the scan position. At this time, the toy body may be scanned while the turntable 130 is stopped at a specific rotational position and the robot arm 120 is controlled to move the scanner 110 in a vertical direction.

In subsequent step S603, the CPU 101 determines whether there is an unselected scan position in the imaging control information 404. If there is any unselected scan position, the process returns to S601 and continues. On the other hand, when there is no unselected scan position, the process proceeds to S604. In S604, the CPU 101 stores the obtained scan information as the scan information 413 of the table 410 in the storage device 104, and ends the scan process.

Next, details of a process in S507 for generating the gaming data 414 based on the scan information obtained in S506 will be described with reference to FIG. 7. First, in step S701, the CPU 101 reads, from the table 400, the frame data 405 corresponding to the specified type of toy body. In subsequent step S702, the display control unit 107 displays the scan information and the frame data 405 on the display device 140, and corrects a position and angle of the scan information so that the scan information is superimposed on the frame data 405. At this time, the CPU 101 may display a guide screen for aligning the scan information based on the frame data 405 and position the scan information in accordance with the guide screen.

The process in S702 is a process for adjusting a coordinate system set for the scan information (which is set during the scan process, and there is variation depending on the individual scan information even for the same type of toy body) to match a coordinate system of the frame data 405. Since the scan information and the frame data 405 are originally information of the same type of toy body, when the scan information and the frame data 405 are displayed in the common coordinate system, the scan information and the frame data 405 should be superimposed and displayed. However, in the coordinate system of the scan information generated by the scan process, a slight deviation may occur, and due to an influence of the deviation, a deviation with respect to the frame data 405 also occurs when the frame data 405 is displayed in a common coordinate system. In S702, in order to adjust the deviation of the coordinate system, the scan information itself is moved or rotated.

FIG. 8 shows an example of a guide screen displayed on the display device 140 during the process in S702. (A) of FIG. 8 shows an example of the operation panel 800 on the guide screen. On the operation panel 800, an "upper surface", a "side surface", and a "front surface" are displayed with respect to a display direction for setting a direction (display direction) in which the scan information is viewed from any direction, and when the "upper surface" is selected, a display screen 810 as shown in (B) of FIG. 8 is displayed. On the display screen 810, scan information 811 on the toy body 200 is displayed from above, that is, an image of a head portion 201 of the toy body 200 as viewed from above is displayed. At this time, for the scan information 811, a corresponding contour position of the frame data 405 is indicated by guide information 812. The scan information 811 can be superimposed on the frame data 405 by moving and rotating a position of the scan information 811 so that the guide information 812 coincides with contour lines of a chest portion of the scan information 811.

In the example of FIG. 8, when the scan information 811 is shifted to an upper side in (B) of FIG. 8 and is rotated in a counterclockwise direction, the scan information 811 is moved to a lower side by a cross key button and is rotated by a rotation button in a clockwise direction, so that the contour of the chest portion of the scan information 811 coincides with the guide information 812 as shown in (C) of FIG. 8.

The scan information 811 can be superimposed on the frame data by performing the same alignment on the "side surface" or the "front surface" other than the upper surface. For example, when the "side surface" is selected, guide information on a side surface of a waist portion can be displayed to align the scan information 811. When the "front surface" is selected, guide information on a front surface of the chest portion and the waist portion can be displayed to align the scan information 811. In the above description, the alignment may be performed when there is a deviation between the scan information 811 and the guide information. Needless to say, there may be a case where no deviation occurs depending on a scan method, in which case no operation instructions for correcting the deviation are required. When an "end" button is operated after an alignment process described above is completed (there is also a case where an operation instruction is completed), the display of the guide screen in FIG. 8 is ended, and the process in S702 is also ended.

Referring back to FIG. 7, when the adjustment of the position and angle of the scan information is completed in S702, the process proceeds to S703, and the CPU 101 superimposes an image prepared in advance at a position corresponding to a deformed portion of the toy body. S703 is a process for determining a position where the gaming data (image) is superimposed on the scan information. The superimposed position may be set on a position in advance in the frame data 405 according to the type of the toy body, or may be determined based on the designation received on the scan information using a guide screen in FIG. 9.

The deformed portion of the toy body is a movable portion such as a bending joint portion like a knee or an elbow of the toy body. In the present embodiment, since the scan information is obtained in a state where an arm and a foot of the toy body are extended, when the joint portion obtained in this manner is displayed by bending or the like during the subsequent game, an appearance of the joint portion becomes unnatural. In this case, joint data corresponding to the deformation prepared in advance for each type of the toy body is superimposed on the deformed (movable) portion of the joint portion or the like. In the present embodiment, for the deformed portion in the structure of the toy body, an image corresponding to deformation prepared in advance is superimposed and displayed on texture data obtained from the scan information. However, the present invention is not limited thereto, and the texture data obtained from the scan information may not be used.

FIG. 9 shows an example of a guide screen when the joint data is superimposed on the scan information. A screen 900 in (A) of FIG. 9 shows an example of an operation panel 900 in which the guide screen is displayed. The operation panel 900 displays a selection button for designating at which joint position of the scan information on the toy body the joint data is superimposed, and (A) of FIG. 9 shows a state where an upper left selection button 901 is selected. That is, a right arm portion of the toy body is selected, and a display screen 910 of the scan information at this time is shown in (B) of FIG. 9. Joint data 912 is superimposed and displayed on a right arm joint portion of the scan information 911. However, in (B) of FIG. 9, angles of the right arm portion and the joint data 912 do not match, and thus it is possible to determine a position of the joint data 912 on the right arm portion of the scan information 911 as shown in (C) of FIG. 9 by operating a button in a counterclockwise rotation direction of the operation panel 900. The joint data 912 may be prepared for each model of the toy body, or one joint data 912 may be commonly used for a plurality of models. In the above, the alignment between the scan information 911 and the joint data 912 may be performed when there is a deviation therebetween. Needless to say, there may be a case where no deviation occurs depending on a scan method, in which case no operation instructions for correcting the deviation are required. When an "end" button is operated after an alignment process described above is completed (there is also a case where an operation instruction is completed), the display of the guide screen in FIG. 9 is ended, and the process in S703 is also ended.

In subsequent step S704, the CPU 101 generates gaming data. Specifically, the CPU 101 generates texture information to be mapped to the frame data based on the scan information generated by the above-described process, associates the texture information with texture coordinates when the texture information is mapped to the frame data, and stores the texture information as the gaming data 414 of the table 410 in the storage device 104. The CPU 101 also includes information on a position where joint data determined in S703 is mapped in the gaming data. Information on a mapping position is a position set in advance in the frame data 405 corresponding to a type of the toy body, or a position determined based on the designation received on the scan information using a guide screen in FIG. 9. As described above, the gaming data 414 can be generated.

In the above, although the robot arm 120 is used to control a position and posture of the scanner 110, positioning may be performed manually instead of the robot arm 120.

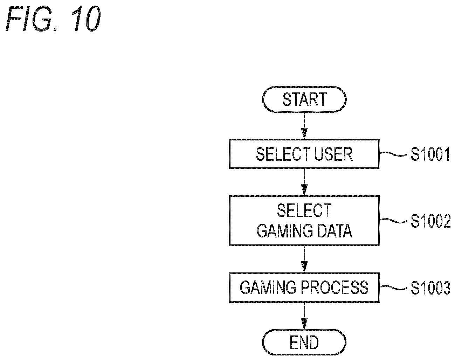

Next, FIG. 10 shows an example of a process executed when a game is performed using gaming data generated by the above-described process. A part of the process corresponding to the flowchart is realized by the CPU 101 of the information processing device 100 executing a program stored in the ROM 103 or the storage device 104.

First, in step S1001, the CPU 101 receives user selection. For example, an input screen is displayed on the display device 140, and input of user information is received. The user information may be a set of a login name and a password. The information is registered in the table 410 as the user information 411.

When the user is specified by the information input in step S1001, the CPU 101 reads, from the table 410, information on the gaming data 414 registered in association with the user and displays the information on the display device 140 in subsequent step S1002. In the present embodiment, a plurality of pieces of gaming data can be registered for one user, and in a case where a plurality of pieces of gaming data 414 are registered, these icon images and the like are displayed on the display device 140 and selection from the user is received. When the gaming data 414 is selected, the process proceeds to S1003, and the gaming process is started. The game may be, for example, an online or offline competitive game in which a character (a robot, a person, a vehicle, an aircraft, or the like) generated from the gaming data is caused to fight against a predetermined field in the virtual space. An opponent may be a CPU such as a gaming device or another user. The type of game is not limited to the competitive game, and can be applied to various games such as a simulation game, a roll play game, and an adventure game. When a plurality of persons participate in the game, processes in steps S1001 and S 1002 are repeated by the number of persons, and then step S1003 is executed.

In S 1003, a game character is generated by mapping the texture information included in the gaming data 414 to the frame data 405 corresponding to the selected gaming data 414. At this time, for a movable portion designated in S703 in FIG. 7, a superimposed image corresponding to a posture of the game character is generated and used based on data on a joint model prepared in advance and superimposed on the texture information included in the gaming data 414. Accordingly, when a joint portion bends, a more natural representation becomes possible.

In the description of the embodiment described above, a case has been described in which gaming data is generated based on information on an appearance of a toy body in order to use a game in a virtual space. However, the use of the gaming data generated in the present embodiment is not limited to the game, and an image displayed in the virtual space can be generated using the gaming data as virtual space data, and the present invention is widely applicable to a process for moving a character in the virtual space. For example, the character may appear in an event, a concert, a sport, an online conference, or the like performed in the virtual space. Further, the technique of the present embodiment can also be applied to a video technique in which a real world such as a crosstalk (XR) is fused with a virtual world, and an object that does not exist in the real space can be perceived.

Thus, in the present embodiment, information on the appearance of the toy body can be obtained, and texture information can be generated from the appearance information and mapped to frame data to be used as a game character, or can be used in any virtual space. For example, as in a plastic model, there is a toy body in which the user performs painting or the like to finish the toy as a unique work, and the individuality can be reflected in a character representation in the game or the virtual space, and thus preference can be significantly improved.

The invention is not limited to the above embodiment, and various modifications and changes can be made without departing from the scope of the invention.

## Claims

1. An information processing device that generates virtual space data that is available in a virtual space from scan information on an appearance of an object obtained by a three-dimensional scanner device, the three-dimensional scanner device being configured to obtain a three-dimensional shape and color information of the object, the information processing device comprising:
a determination unit configured to determine a type of the object;
an obtaining unit configured to obtain frame data, the frame data corresponding to the determined type of the object and being configured to map texture information obtained from the scan information;
a display control unit configured to display, on a display unit, a first screen including display of first scan information generated by scanning the object with the three-dimensional scanner device, the first screen being configured for adjusting a coordinate system set for the first scan information in accordance with a coordinate system set for the frame data;
a reception unit configured to receive an instruction including a first operation instruction for at least one of movement and rotation with respect to the first scan information displayed on the first screen; and
a first generation unit configured to generate the virtual space data including texture information to be mapped on the frame data from the frame data and second scan information obtained after the display of the first screen ends in response to the instruction.

2. The information processing device according to claim 1, wherein
the first screen includes display of the first scan information corresponding to any portion of the object and display showing a position of the portion in the frame data, and
the reception unit receives an operation instruction for matching a display position of the first scan information of the portion with a display position of a position of the portion.

3. The information processing device according to claim 2, wherein
the first screen includes a switching operation unit configured to switch a display direction of the first scan information, and
displays the first scan information of any portion of the object and the position of the portion in the frame data in a display direction corresponding to the selected switching operation unit.

4. The information processing device according to any one of claims 1 to 3, wherein
the first generation unit generates the virtual space data so as to include position information of an image to be superimposed and displayed on the second scan information corresponding to a predetermined position of the object.

5. The information processing device according to any one of claims 1 to 3, wherein
the display control unit causes the display unit to further display a second screen for adjusting a position of an image to be superimposed and displayed on the first scan information corresponding to a predetermined location of the object,
the reception unit is configured to further receive a second operation instruction for any one of movement and rotation with respect to the image displayed on the second screen, and
the first generation unit generates the virtual space data so as to further include position information of the image according to the second operation instruction.

6. The information processing device according to claim 4 or 5, wherein
the predetermined location is a movable portion of the object.

7. The information processing device according to claim 6, wherein
when the object is a humanoid toy body, the movable portion is a joint portion.

8. The information processing device according to any one of claims 1 to 7, further comprising
a selection unit configured to select, based on the determined type of the object, a fastener that defines a posture of the object when the three-dimensional scanner device scans the object.

9. The information processing device according to claim 8, wherein
the first scan information is generated by the three-dimensional scanner device scanning the object in a posture determined by the fastener.

10. The information processing device according to any one of claims 1 to 9, further comprising
a position and posture control device provided with the three-dimensional scanner device and configured to control a position and a posture of the three-dimensional scanner device, wherein
the first scan information is generated by the three-dimensional scanner device scanning the object at a predetermined position and posture provided by the position and posture control device.

11. The information processing device according to any one of claims 1 to 10, further comprising
a rotation device on which the object is placed and configured to rotate, wherein
the first scan information is generated by the three-dimensional scanner device scanning the object placed on the rotation device.

12. The information processing device according to any one of claims 1 to 11, wherein
the determination unit determines a type of the object based on information on a predetermined portion of the object.

13. The information processing device according to claim 12, wherein
when the object is a humanoid toy body, the predetermined portion is a sole.

14. An image processing device that generates an image displayed in a virtual space using virtual space data generated by the information processing device according to any one of claims 4 to 7, the image processing device further comprising
a second generation unit configured to generate display information of a predetermined character corresponding to the object by mapping texture information included in the virtual space data to frame data, wherein
the second generation unit generates the display information such that a predetermined superimposed image other than the texture information included in the virtual space data is displayed at a position corresponding to a predetermined portion of the object of display information of the character based on the position information included in the virtual space data.

15. The image processing device according to claim 14, wherein
the superimposed image is an image common to a plurality of types of the object.

16. The image processing device according to claim 14, wherein
the superimposed image is an image unique to the type of the object.

17. A computer program for causing a computer to operate as the information processing device according to any one of claims 1 to 12 or each unit of the image processing device according to any one of claims 14 to 16.
